# EUROPÄISCHE PATENTSCHRIFT

(11) **EP 0 604 760 B1**
(45) Veröffentlichungstag und Bekanntmachung des Hinweises auf die Patenterteilung: **01.10.1997**
(21) Anmeldenummer: 93118806.4
(22) Anmeldetag: 23.11.1993
(51) Int. Cl.: B60Q 1/00, B60Q 1/28

(54) **Befestigung für eine Blinkleuchte benachbart einem Scheinwerfer eines Kraftfahrzeuges**
Light fixation adjacent to the headlamp of a vehicle
Fixation d'un feu sur le côté d'un phare de véhicule

(30) Priorität: 26.11.1992 DE 4239753
(43) Veröffentlichungstag der Anmeldung: 06.07.1994
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE S. A., 92506 Rueil-Malmaison (FR)
(72) Erfinder: Kees, Wolf-Henning, D-41569 Rommerskirchen (DE)
(74) Vertreter: Messulam, Alec Moses

(56) Entgegenhaltungen:
- DE-A- 3 044 313

## Beschreibung

Die Erfindung bezieht sich auf die Befestigung für eine Blinkleuchte benachbart einem Scheinwerfer eines Kraftfahrzeuges, der im Oberbegriff des Patentanspruches 1 erläuterten Art.

Eine derartige Befestigung ist aus der DE-A-3 516 711 bekannt.

Aus der DE-C-30 44 313 ist eine Befestigung für eine Blinkleuchte oder einen Scheinwerfer eines Kraftfahrzeuges bekannt, wobei die Blinkleuchte oder der Scheinwerfer in einer Mulde eines Karosseriebauteiles aufgenommen und über einem an ihrem Gehäuse ausgebildeten Drehpunkt schwenkbar an einer Aufnahme in der Mulde abgestützt und über ein an ihr ausgebildetes oder befestigtes Federbauteil belastet und über eine, zumindest eine Raststufe aufweisende Rastfeder in Einbaulage gehalten ist.

Bei der bekannten Befestigung für eine Blinkleuchte oder einen Scheinwerfer wurde nicht die Situation berücksichtigt, die sich bei der unmittelbar benachbarten Anordnung von einer Blinkleuchte und einem Scheinwerfer ergibt.

Aus der DE-A-35 16 711 ist eine Befestigung für eine Blinkleuchte benachbart einem Scheinwerfer eines Kraftfahrzeuges bekannt, bei der die in einer Mulde eines Karosseriebauteiles aufgenommene Blinkleuchte über an ihrem Gehäuse ausgebildete oder befestigte Federorgane mit dem benachbarten Scheinwerfer und Teilen der Karosseriemulde verrastet ist.

Bei dieser bekannten Befestigung für eine Blinkleuchte benachbart einem Scheinwerfer eines Kraftfahrzeuges, wird davon ausgegangen, daß die erforderlichen Einstellvorrichtungen zum Einstellen des Scheinwerfers von der Rückseite des Scheinwerfers her bedienbar sind.

Bei einer Blinkleuchte, die benachbart einem Nebelscheinwerfer im Stoßfänger eines Kraftfahrzeuges angeordnet ist, ist eine Zugänglichkeit von Einstellvorrichtungen von der Rückseite des Scheinwerfers her nicht in günstiger Weise gegeben.

Die Aufgabe der Erfindung ist es daher, eine Befestigung für eine Blinkleuchte benachbart einem Scheinwerfer eines Kraftfahrzeuges zu schaffen, die über entsprechende Federorgane nicht nur in ihrer Einbaulage gehalten wird, sondern darüber hinaus in einer Vormontagelage gehalten werden kann, um den Zugang zu einer von vorn zugänglichen Einstellvorrichtung des Scheinwerfers zu ermöglichen.

Gemäß der Erfindung wird diese Aufgabe gelöst, indem eine Befestigung für eine Blinkleuchte benachbart einem Scheinwerfer eines Kraftfahrzeuges, der im Oberbegriff des Patentanspruches 1 erläuterten Art, die im Kennzeichenteil des Patentanspruches 1 aufgezeigten Merkmale aufweist.

Dadurch, daß in der Einbaulage der Blinkleuchte die Einstellvorrichtung durch die Blinkleuchte verdeckt ist und in einer Vormontagelage der Blinkleuchte die Einstellvorrichtung für ein Einstellwerkzeug zugänglich ist und wobei das Feder-Halteorgan in Form einer Rastfeder neben einer Raste für die Einbaulage noch eine weitere Raste für eine Vormontagelage aufweist, wird der Vorteil erzielt, daß bei der fortschreitenden Montage des Kraftfahrzeuges an der Endmontagelinie des Kraftfahrzeuges die Scheinwerfer und die benachbarte Blinkleuchte bereits frühzeitig eingebaut werden können, obwohl die zur korrekten Einstellung des Lichtbündels des Scheinwerfers erforderliche Komplettierung des Kraftfahrzeuges noch nicht erfolgt ist. Die Einstellung des Scheinwerfers kann vielmehr dann in genauer, zuverlässiger Weise erfolgen, wenn das Kraftfahrzeug vollständig montiert ist, also sämtliche Inneneinrichtungsbauteile mit ihren entsprechenden Gewichten an Bord sind. Durch die in einer Vormontagelage gehaltene Blinkleuchte kann somit zum Abschluß eine korrekte Einstellung der Scheinwerfer bewerkstelligt werden und durch Befestigen der Blinkleuchte in ihrer Einbaulage wird die von vorne zugängliche Einstellvorrichtung für den Scheinwerfer durch die Blinkleuchte verdeckt, was aus stilistischen Gründen wünschenswert ist.

Die Ansprüche 2 und 3 betreffen bevorzugte Ausführungsformen der Erfindung.

Die Erfindung wird anhand eines in den Zeichnungen gezeigten Ausführungsbeispieles näher erläutert. Es zeigt:
- Fig. 1: eine schematische Frontansicht auf eine Blinkleuchte-Scheinwerfer-Anordnung im Stoßfänger eines Kraftfahrzeuges;
- Fig. 2: zeigt einen horizontalen Schnitt entlang der Linie II-II in Fig. 1 und

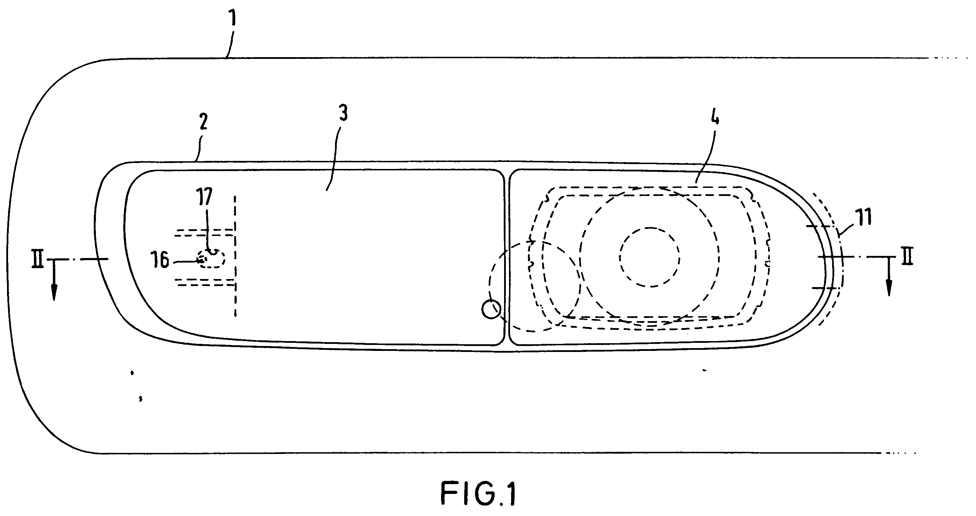

In Fig. 1 ist in einem Stoßfänger oder einem Karosseriebauteil 1 in einer Mulde 2 eine Blinkleuchte 3 benachbart einem Nebelscheinwerfer 4 angeordnet.

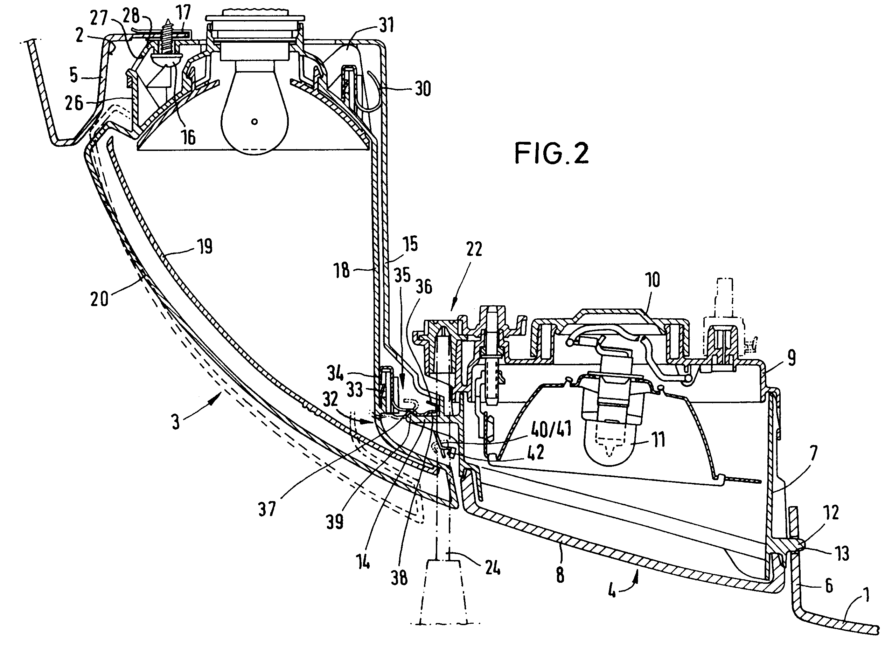

Die erfindungsgemäße Befestigung wird anhand des horizontalen Schnittes der Figur 2 näher erläutert.

In der Figur 2 ist in einem z.B. ein Karosseriefrontende bildenden Stoßfänger 1 eine Aufnahmemulde 2 sowohl für eine Blinkleuchte 3 als auch für einen Nebelscheinwerfer 4 vorgesehen. Bei der Mulde 2 muß es sich hierbei keineswegs um eine vollständige Mulde handeln, diese kann vielmehr lediglich durch bestimmte nach innen zurückgezogene Randbereiche 5 und 6 des Stoßfängers 1 gebildet sein, die zur Aufnahme der Blinkleuchte 3 und des Nebelscheinwerfers 4 vorgesehen sind.

Der Nebelscheinwerfer 4 besteht hierbei im wesentlichen aus einem Scheinwerfergehäuse 7, das vorn durch eine Scheinwerfer-Lichtscheibe 8 und hinten durch ein Einstellgehäuse 9 und einen Verschlußdeckel 10 abgeschlossen ist, wobei letzterer ein Auswechseln der Lampenanordnung 11 ermöglicht.

Das Scheinwerfergehäuse 7 weist an seiner zur Mitte des Fahrzeuges liegenden Seite einen länglichen Vorsprung 12 auf, der in einer entsprechenden Öffnung 13 im Rand 6 des Stoßfängers 1 aufgenommen wird.

Das Scheinwerfergehäuse 7 ist zur Außenseite des Fahrzeuges hin mit einem vertikalen Steg 14 versehen, an dem sich ein Erweiterungsbauteil 15 anschließt, das eine Aufnahmemulde für die Blinkleuchte 3 bildet. Das Ende der Aufnahmemulde 15 ist über eine Schraube/Federmutter-Befestigung 16/17 am Rand 5 der Mulde 2 des Stoßfängers 1 befestigt.

Die Blinkleuchte 3 besteht im wesentlichen aus einem Blinkleuchtengehäuse 18 mit z.B. einer inneren farbigen Lichtscheibe 19 und einer äußeren farbneutralen Lichtscheibe 20, die normalerweise mit ihrer Außenkontur in einer Linie mit der Scheinwerfer-Lichtscheibe 8 liegt.

Zur Einstellung des Nebelscheinwerfers 4 ist eine herkömmliche Einstellvorrichtung 22 als Ganzes bezeichnet, deren Einzelheiten nicht näher erläutert zu werden brauchen. Die Einstellvorrichtung 22 ist von vorne aus mittels eines Einstellwerkzeuges, wie z.B. eines Schraubendrehers 24 (in Strich-Punkt-Linien angedeutet) betätigbar.

Die Einstellung eines solchen Nebelscheinwerfers muß hierbei zweckmäßigerweise erst nach vollständig montiertem Fahrzeug erfolgen, da erst bei voll ausgerüstetem Fahrzeug die entsprechende gewünschte Leuchtweite zuverlässig eingestellt werden kann.

Die Blinkleuchte ist an ihrem Blinkleuchtengehäuse 18 mit einem Rastvorsprung 26 versehen, der in einer Aufnahmeöffnung 27 an einer Konsole 28 des Erweiterungsbauteiles 15 aufgenommen wird. Über eine Feder 30 und eine Abstützrippe 31 stützt sich das Blinkleuchtengehäuse 18 innerhalb des Erweiterungsbauteiles 15 ab und das zur Fahrzeugmitte hinweisende Ende 32 des Blinkleuchtengehäuses 18 nimmt in einer Aufnahmeöffnung 33 den einen Schenkel 34 einer Rastfeder 35 auf, die sich mit ihrem freien Schenkel 36 am Steg 14 des Scheinwerfergehäuses 7 abstützt.

Die im wesentlichen L-förmige Rastfeder 35 ist mit ihrem einen Schenkel 34 am Blinkleuchtengehäuse 18 in herkömmlicher Weise festgelegt und weist an ihrem freien Schenkel 36 zumindest zwei Rastmulden 37 und 38 auf, mit denen sie mit einem Wulst 39 am Steg 14 zusammenwirken kann.

Bei der Endmontage des Kraftfahrzeuges wird im montierten Stoßfänger 1 zunächst die Baugruppe des Nebelscheinwerfers 4 montiert, darauffolgend wird die Baugruppe der Blinkleuchte 3 montiert, wobei jedoch das vordere Ende der Blinkleuchte nur in die erste Rastmulde 38 eingerastet wird, wodurch sie sich in ihrer Vormontagelage befindet, die in Figur 2 durch gestrichelte Linien angedeutet ist. In dieser Vormontagelage ist die Einstellvorrichtung 22 mittels eines Werkzeuges, z.B. eines in Strich-Punkt-Linien angedeuteten Schraubendrehers 24 von vorn zugänglich.

Sobald der Nebelscheinwerfer 4 durch Betätigen der Einstellvorrichtung 22 korrekt eingestellt ist, ist es lediglich erforderlich, nach Entfernen des Werkzeuges von Hand aus auf das vordere Ende der Blinkleuchte 3 zu drücken, wodurch die Rastfeder 35 veranlaßt wird, in die zweite Rastmulde 37 einzufallen in der die Blinkleuchte 3 in ihrer Einbaulage festgehalten wird.

An der in Figur 2 gezeigten Ausführungsform der Erfindung sind am freien Schenkel 36 der L-förmigen Rastfeder 35 oben und unten abgewinkelte Hebelarme 40/41 vorgesehen, die in einer Werkzeugaufnahme 42 enden, wodurch mittels eines Schraubendrehers ein einfacheres Einrasten der Rastfeder 35 in die jeweils gewünschte Einbaulage oder die Vormontagelage bewerkstelligt werden kann.

Die Ausführungsform der Rastfeder kann selbstverständlich in weiten Bereichen variiert werden, sofern gewährleistet wird, daß neben der Raststufe für die Einbaulage auch eine entsprechende Raststufe für eine Vormontagelage vorgesehen wird.

## Patentansprüche

1. Befestigung für eine Blinkleuchte (3) benachbart einem Scheinwerfer (4) eines Kraftfahrzeuges, wobei eine am mit einer Einstellvorrichtung (22) ausgerüsteten Scheinwerfer (4) unmittelbar anschließende Blinkleuchte (3) in einer Mulde (2) eines Karosseriebauteiles (1) aufgenommen und über an ihrem Gehäuse (18) ausgebildete oder befestigte Feder-Halteorgane (35) in ihrer Einbaulage gehalten ist,
**dadurch gekennzeichnet,** daß - das Blinkleuchtengehäuse (18) über einen Rastvorsprung (26) schwenkbar an einer Aufnahme (27) in der Mulde (2) gehalten ist, und zusätzlich eine Abstützung (30,31) aufweist, mit der es sich in der Einbaulage an einem Erweiterungsbauteil (15) des Scheinwerfergehäuses (7) abstützt,
- in der Einbaulage der Blinkleuchte (3) die Einstellvorrichtung (22) für den Scheinwerfer (4) durch die Blinkleuchte verdeckt ist,
- in einer Vormontagelage der Blinkleuchte (3) die Einstellvorrichtung (22) für ein Stellwerkzeug (24) zugänglich ist, wobei
- das Feder-Halteorgan (35) neben einer Raste (37) für die Einbaulage der Blinkleuchte (3) noch eine weitere Raste (38) für die Vormontagelage aufweist.

2. Befestigung für eine Blinkleuchte nach Anspruch 1,
**dadurch gekennzeichnet**, daß
- die Rastfeder (35) L-förmig ausgebildet ist, mit ihrem einen Schenkel (34) am Blinkleuchtengehäuse (18) festgelegt ist und an ihrem freien Schenkel (36) zwei Rastmulden (37 und 38) aufweist, die mit einem Rastwulst (39) an einem Steg (14) des Nebelscheinwerfergehäuses (7) zusammenwirken.

3. Befestigung für eine Blinkleuchte nach den Ansprüchen 1 und 2,
**dadurch gekennzeichnet**, daß
- die Rastfeder (35) an ihrem freien Schenkel (36) zusätzlich mit abgewinkelten Hebelarmen (40/41) und einer Betätigungsaufnahme (42) zur Aufnahme eines Werkzeuges, z.B. eines Schraubendrehers versehen ist.

## Claims

1. Fastening for a flasher lamp (3) adjacent to a headlamp (4) of a motor vehicle, wherein a flasher lamp (3) immediately adjacent to a headlamp (4) equipped with an adjusting device (22) is mounted in a well (2) in a body member (1) and is held in its installed position by spring detent means (35) formed on or fastened to its housing (18),
characterised in that
- the flasher lamp housing (18) is held pivotally on a mounting (27) in the well (2) by means of a projecting detent part (26), and in addition has a support (30, 31) by which in the installed position it is supported on an extension (15) of the headlamp housing,
- in the installed position of the flasher lamp (3) the adjusting device (22) for the headlamp (4) is concealed by the flasher lamp,
- in a pre-assembly position of the flasher lamp (3) the adjusting device (22) is accessible to an adjusting tool (24), and
- the spring detent means (35) also includes, as well as a detention point (37) for the installed position of the flasher lamp (3), a further detention point (38) for the pre-assembly position.

2. Fastening for a flasher lamp according to claim 1,
characterised in that
- the detent spring (35) is L-shaped, has one of its limbs (34) fixed to the flasher lamp housing (18) and has on its free limb (36) two detent recesses (37 and 38) which cooperate with a detent bead (39) on a rail (14) of the fog headlamp housing (7).

3. Fastening for a flasher lamp according to claims 1 and 2,
characterised in that
- the detent spring (35) is additionally provided on its free limb (36) with angled lever arms (40/41) and with an operating recess (47) to receive a tool, e.g. a screwdriver.

## Revendications

1. Fixation pour un feu clignotant (3) à proximité d'un phare (4) d'un véhicule automobile, d'après laquelle un feu clignotant (3), se raccordant directement à un phare (4) muni d'un dispositif de réglage (22), est reçu dans une cavité (2) d'une pièce de carrosserie (1) et maintenu à sa position installée par des organes de maintien élastiques (35) formés ou fixés à son boîtier (18), caractérisée en ce que
- le boîtier (18) du feu clignotant est maintenu pivotant, par une saillie d'arrêt (26), sur une réception (27) dans la cavité (2), et présente en plus un appui (30, 31) par lequel il s'appuie, à la position installée, sur une pièce d'extension (15) du boîtier (7) du phare,
- le dispositif de réglage (22) du phare (4) est masqué par le feu clignotant (3) lorsque celui-ci occupe sa position installée,
- le dispositif de réglage (22) est accessible par un outil de réglage (24) lorsque le feu clignotant occupe une position de préassemblage,
- l'organe de maintien élastique (35) présentant, outre un cran (37) pour la position installée du feu clignotant (3), un cran supplémentaire (38) pour la position de préassemblage.

2. Fixation pour un feu clignotant selon la revendication 1, caractérisée en ce que le ressort d'arrêt (35) est réalisé en forme de L, fixé par l'une (34) de ses branches au boîtier (18) du feu clignotant et pourvu, sur sa branche libre (36), de deux crans d'arrêt (37 et 38) qui coopèrent avec un bourrelet d'arrêt (39) sur une nervure (14) du boîtier (7) du phare anti-brouillard.

3. Fixation pour un feu clignotant selon les revendications 1 et 2, caractérisée en ce que le ressort d'arrêt (35) est pourvu en outre, sur sa branche libre (36), de bras de levier coudés (40/41) et d'une réception d'actionnement (42) destinée à recevoir un outil, un tournevis par exemple.
